**Europäisches Patentamt**

**European Patent Office**

**Office européen des brevets**

(11) Veröffentlichungsnummer: **0 377 820**

**A1**

(12) ## EUROPÄISCHE PATENTANMELDUNG

(21) Anmeldenummer: **89122140.0**

(51) Int. Cl.5: **F16B 13/06**

(22) Anmeldetag: **30.11.89**

(30) Priorität: **13.01.89 DE 3900828**
**02.02.89 DE 3903020**

(43) Veröffentlichungstag der Anmeldung:
**18.07.90 Patentblatt 90/29**

(84) Benannte Vertragsstaaten:
**AT BE CH DE ES FR GB IT LI NL**

(71) Anmelder: **fischerwerke Artur Fischer GmbH & Co. KG**
**Weinhalde 14 - 18**
**D-7244 Waldachtal 3/Tumlingen(DE)**

(72) Erfinder: **Fischer, Artur, Prof. Dr. h. c.**
**Weinhalde 34**
**D-7244 Waldachtal 3/Tumlingen(DE)**

(54) **Spreizdübel für die Verankerung in einem Bohrloch eines Mauerwerks.**

(57) Spreizdübel, bestehend aus einer Spreizhülse und einem Spreizkörper sowie einem Befestigungselement, werden als Befestigungsanker zur Erzielung hoher Haltewerte verwendet. Die aus Stahl gefertigten Spreizdübel lassen sich formschlüssig in Bohrlöcher mit Hinterschneidung in ein Mauerwerk einsetzten.

Der vorgeschlagene Spreizdübel besteht aus zwei Teilen, wobei die Befestigungsschraube (2) mit ihrem Gewinde (13) in den Spreizbereich der Spreizhülse (1) eingreift und diesen aufspreizt.

Dabei bewirken die an den Spreizsegmenten (12) als Außengewinde angeordneten Außenkerben nach der infolge der Montage erfolgten Verspreizung der Spreizsegmente einen günstigen Toleranzausgleich am hinterschnitten Bohrloch.

Fig. 1

EP 0 377 820 A1

## Spreizdübel für die Verankerung in einem Bohrloch eines Mauerwerks

Die Erfindung betrifft einen Spreizdübel für die Verankerung in einem Bohrloch eines Mauerwerks gemäß der Gattung des Hauptanspruchs und ein Verfahren zu dessen Herstellung.

Es sind Spreizdübel bekannt, die aus einer Spreizhülse und einer Befestigungsschraube bestehen. Die Spreizhülse derartiger Spreizdübel besitzt an ihrem Ende eine Spreizbereich, der in eine Hinterschneidung eines Bohrlochs formschlüssig eingreifen kann. Zu diesem Zweck wird ein Spreizelement innerhalb der Spreizhülse in den Spreizbereich eingeführt, wodurch dessen Spreizsegmente aufspreizen und in die Hinterschneidung des Bohrlochs eingreifen.

Um hohe Haltewerte zu erzielen, müssen die auch als Spreizanker bezeichneten Spreizdübel aus Stahl bestehen. Dies hat zur Folge, daß verhältnismäßig große Spreizkräfte bei den herkömmlichen Spreizdübeln erforderlich sind, um die Spreizsegmente aufzuspreizen. Mit entsprechend konisch geformten Spreizkörpern konnten bei den herkömmlichen Spreizdübeln die erforderlichen Spreizkräfte auf die Spreizsegmente übertragen werden.

Der Erfindung liegt die Aufgabe zugrunde, einen Spreizdübel aus Stahl zu schaffen, der im Aufbau und in der Montage einfach ist und keinen konisch geformten Spreizkörper erfordert.

Die Lösung dieser Aufgabe wird bei einem Spreizdübel der eingangs genannten Gattung durch die im kennzeichnenden teil des Hauptanspruchs angegebenen Merkmale erhalten. Der Spreizdübel besitzt eine Spreizhülse mit einem im Spreizbereich sich verjüngenden Innengewinde, in das eine in die Spreizhülse eingeführte Befestigungsschraube eindrehbar ist. Zum Eindrehen der Befestigungsschraube wird vorzugsweise ein Bohrhammer verwendet, da Versuche gezeigt haben, daß mittels eines solchen Bohrhammers das Einschrauben der Befestigungsschraube mit gleichzeitigem Aufspreizen der Spreizsegmente problemlos vorgenommen werden kann. Gerade durch die Anbringung eines Innengewindes auch im Bereich der Spreizsegmente wird der Spreizvorgang begünstigt. Außerdem wird dadurch erreicht, daß die Befestigungsschraube mit ihren Gewindegängen in dem Spreizbereich in das Innengewinde der Spreizsegmente eingreift, wodurch eine sehr günstige Einleitung der an der Befestigungsschraube auftretenden Zugkräfte in die Spreizhülse erzielt wird. Es entsteht ein Formschluß zwischen Befestigungsschraube und Spreizsegmente und dem Mauerwerk, in das der Spreizdübel eingesetzt ist.

Die an den Spreizsegmenten als Außengewinde angeordneten Außenkerben bewirken nach der infolge der Montage erfolgten Verspreizung der Spreizsegmente einen günstigen Toleranzausgleich am hinterschnittenen Bohrloch. Die so beschaffenen Spreizsegmente erfordern ebenfalls einen geringeren Kraftaufwand, bei der während der Montage erfolgenden Verspreizung.

Eine vorteilhafte Weiterbildung der Erfindung sieht vor, daß die Kerbentiefe des Außengewindes zur Stirnseite der Spreizsegmente hin zunimmt. Dadurch wird auf die gesamte Länge der Spreizsegmente deren formschlüssiges Eingreifen in das hinterschnittene Bohrloch gewährleistet. Das formschlüssige Eingreifen der an der Außenfläche der Spreizsegmente angeordneten Außenkerben wird ebenfalls durch deren Verzahnung mit den Seitenwänden des konisch ausgeformten Bohrloches erreicht, wodurch eine exakte und sichere Verankerung des Spreizdübels im hinterschnittenen Bohrloch gewährleistet ist.

Der Spreizdübel bildet eine sehr einfache Einheit, die aus lediglich zwei Teilen besteht. Bei der Durchsteckmontage wird der Spreizdübel, in dessen Spreizhülse die Befestigungsschraube mit zwei bis drei Umdrehungen eingeschraubt sein kann, durch eine Bohrung eines zu befestigenden Gegenstandes in ein dahinter befindliches Bohrloch eines Mauerwerks eingeführt. Dies kann mittels eines Bohrschraubers erfolgen, wobei jedoch der Spreizvorgang erst dann beginnt, sobald die Spreizhülse am Bohrlochgrund anliegt und sich aufgrund der auftretenden Reibung nicht mehr mit der Befestigungsschraube mitdreht.

Die Spreizhülse kann an ihrem dem Schraubenkopf der Befestigungsscharube zugewandten Ende einen angeformten Bund haben, der der Eindringtiefe des Spreizdübels begrenzt. Sobald der Bund an dem zu befestigenden Gegenstand, beispielsweise einer Holzlatte, zur Anlage kommt, tritt eine Reibung zwischen Bund und dem zu befestigenden Gegenstand auf, so daß dadurch die Befestigungsschraube in dem Spreizbereich eindringt und der Spreizvorgang erfolgt.

Mit dem Verfahrensanspruch wird ein besonders vorteilhaftes Herstellungsverfahren für die Spreizhülse angegeben. Die Spreizhülse kann aus einem zylindrischen Bolzen hergestellt werden, dessen Außendurchmesser dem Außendurchmesser der Spreizhülse entspricht. Dies wird dadurch erreicht, daß vor dem Schneiden des Innegewindes der Spreizbereich mittels eines Dorns oder dergleichen aufgeweitet wird und anschließend wieder in seine ursprüngliche Form zusammengedrückt wird.

Die Erfindung wird nachfolgend anhand der Zeichnungen näher erläutert:

Es zeigen:

Figur 1 einen in einem Bohrloch eines Mau-

erwerks eingesetzten erfindungsgemäßen Spreiz-dübel,

Figur 2 die Spreizhülse des Spreizdübels von Figur 1 mit abgestufter Längsbohrung,

Figur 3 die Spreizhülse von Figur 2 nach dem Aufweiten mittels eines Dorns,

Figur 4 eine mit einem Bund versehene Spreizhülse eines Spreizdübels,

Figur 5 einen in einem Bohrloch eines Mau-erwerks eingesetzten erfindungsgemäßen Spreiz-dübel mit an dem Spreizsegmenten angeordneten Außenkerben.

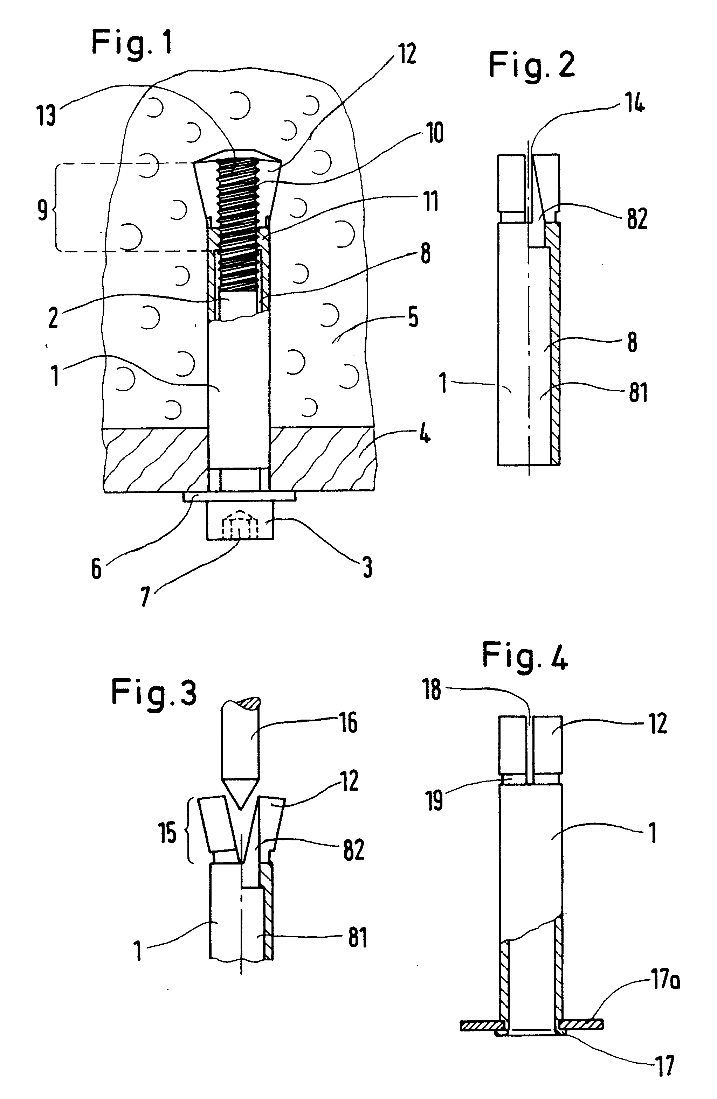

Der in Figur 1 dargestellte Spreizdübel besteht aus einer Spreizhülse 1 und einer Befestigungsschraube 2, die mit ihrem Schraubenkopf 3 einen zu befestigenden Gegenstand 4 an der Wandoberfläche eines Mauerwerks 5 festhält. Zwischen dem Gegenstand 4, der Teil einer Lattenkonstruktion sein kann, und dem Schraubenkopf 3 ist eine Unterlegscheibe 6 eingefügt. Der Schraubenkopf 3 besitzt einen Innensechskant 7, in den ein hier nicht dargestellter Inbusdreher einsetzbar ist.

Die Spreizhülse 1 besitzt eine Längsbohrung 8, die im Abschnitt 9 ein Innengewinde 10 aufweist. Das Innengewinde 10 erstreckt sich über einen kleinen Abschnitt 11 des zylindrischen Teils der Spreizhülse 1 und auch im aufgeweiteten Spreizbereich, der von Spreizsegmenten 12 gebildet wird. Die Befestigungsschraube 2 greift mit ihrem Gewinde 13 in das Innengewinde 10 ein, wodurch eine stabile Verbindung zwischen Befestigungsschraube 2 und den Spreizsegmenten 12 entsteht.

In Figur 2 ist die Spreizhülse 1 noch ohne Innengewinde 10 ersichtlich. Die Längsbohrung 8 setzt sich zusammen aus einer ersten Längsborhung 81 und einer zweiten Längsbohrung 82 mit reduziertem und zum Ende 14 hin spitz zulaufendem Durchmesser.

Zum Schneiden des Innengewindes 10 wird wie in Figur 3 ersichtlich die Spreizhülse 1 im Spreizbereich 15 mittels eines Dorns 16 aufgeweitet, so daß die Längsbohrung 82 einen zylindrischen Verlauf wie in figur 3 dargestellt erhält. In diesem Zustand kann nun in die Längsbohrung 82 mittels eines Gewindeschneiders das Innengewinde 10 (Figur 1) geschnitten werden. Die Segmente 12 werden danach wieder in ihre Ausgangsposition zusammengedrückt, wie in Figur 4 ersichtlich.

Die in figur 4 dargestellte Spreizhülse 1 besitzt einen angeformten Bund 17. An diesem kann eine Unterlegscheibe 17a angebracht sein. In ihren übrigen Merkmalen unterscheidet sich jedoch diese Spreizhülse nicht von der Spreizhülse gemäß Figur 1.

Die Spreizsegmente 12 sind in an sich bekannter Weise durch Längsschlitze 18 unterteilt, die bis zu einer Ringnut 19 verlaufen. Die Ringnut 19 bildet den Übergang zwischen zylindrischem Bereich und Spreizbereich 15 und ist für ein definiertes Aufspreizen der Spreizsegment 12 günstig.

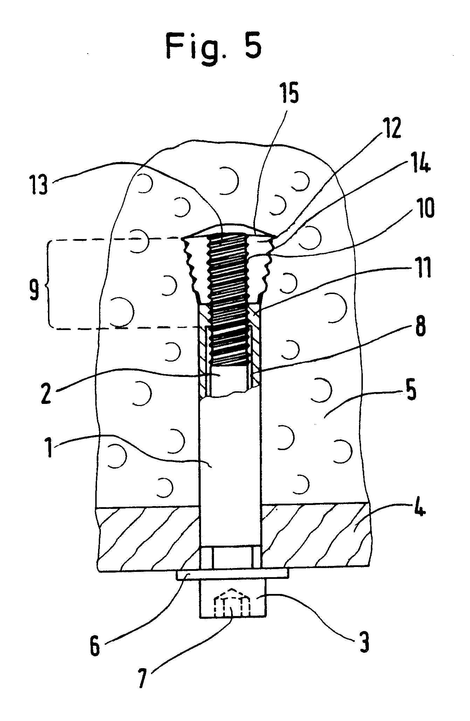

Der in figur 5 dargestellte Spreizdübel besteht aus einer Spreizhülse 1 und einer Befestigungsschraube 2, die mit ihrem Schraubenkopf 3 einen zu befestigenden Gegenstand 4 an der Wandoberfläche eines Mauerwerks 5 festhält. Zwischen dem Gegenstand 4, der Teil einer Lattenkonstruktion sein kann, und dem Schraubenkopf 3 ist eine Unterlegscheibe 6 eingefügt. Der Schraubenkopf 3 besitzt einen Innensechskant 7, in den ein hier nicht dargestellter Inbusdreher einsetzbar ist. Die Spreizhülse 1 besitzt eine Längsbohrung 8, die im Abschnit 9 ein Innengewinde 10 aufweist. Das Innengewinde 10 erstreckt sich über einen kleinen Abschnitt 11 des zylindrischen Teils der Spreizhülse 1 und auch im aufgeweiteten Spreizbereich, der von Spreizsegmenten 12 gebildet wird. Die Befestigungsschraube 2 greift mit ihrem Gewinde 13 in das Innengewinde 10 ein, wodurch eine stabile Verbindung zwischen Befestigungsschraube 2 und den Spreizsegmenten 12 entsteht. Die Spreizsegmente 12 weisen auf ihre gesamte Länge Außenkerben 14 auf, die zur Stirnseite 15 der Spreizsegmente 12 eine Zunahme der Kerbentiefe aufwei-sen.

## Ansprüche

1. Spreizdübel aus Stahl für die Verankerung in einem Bohrloch eines Mauerwerks, bestehend aus einer Spreizhülse mit einem Spreizsegmente aufweisenden Spreizbereich, dessen Längsbohrung sich am Ende des Spreizbereichs verjüngt, und einer bis in den Spreizbereich einführbaren Befestigungsschraube, **dadurch gekennzeichnet**, daß in einem an den Spreizbereich (15) angrenzenden Teilbereich der zylindrischen Bohrung (81) der Spreizhülse (1) ein Innengewinde (10) ausgebildet ist, das im Spreizbereich (15) in eine zum freien Ende (14) sich verjüngende Gewindebohrung (10) übergeht, und daß die Befestigungsschraube (2) beim Eindrehen bis in den Spreizbereich (15) diesen aufspreizt.
(Priorität: 13.01.89; P 39 00 828.2)

2. Spreizdübel nach Anspruch 1, **dadurch gekennzeichnet**, daß an den Spreizsegmenten (12) des Spreizbereichs der Spreizhülse (1) Außenkerben (14) angeordnet sind, die diesen als Außengewinde umlaufen.
(Priorität: 02.02.89; P 39 03 020.2)

3. Spreizdübel nach Anspruch 1 oder 2, **dadurch gekennzeichnet**, daß die Kerbentiefe der Außenkerben (14) zur Stirnseite der Spreizsegmente hin zunimmt. (Priorität: 02.02.89; P 39 03 020.2)

4. Spreizdübel nach Anspruch 1, **dadurch gekennzeichnet**, daß die Längsbohrung (8) der Spreizhülse (1) bis zum Anfang des Innengewindes (10) einen dem Außendurchmesser des Gewindes (13) der Befestigungsschraube (2) entsprechenden Durchmesser hat.
(Priorität: 13.01.89; P 39 00 828.2)

5. Spreizdübel nach Anspruch 1 oder 4, **dadurch gekennzeichnet**, daß die Spreizhülse (1) an ihrem dem Schraubenkopf (3) der Befestigungsschraube (2) zugewandten Ende einen angeformten Bund (17) hat.
(Priorität: 13.01.89; P 39 00 828.2)

6. Spreizdübel nach einem der vorhergehenden Ansprüche, **dadurch gekennzeichnet**, daß eine Ringnut (19) am Übergang zum Spreizbereich (15) ausgebildet ist.
(Priorität: 13.01.89; P 39 00 828.2)

7. Verfahren zur Herstellung der Spreizhülse eines Spreizdübels nach einem der vorhergehenden Ansprüche, **dadurch gekennzeichnet**, daß in einem zylindrischen Stahlbolzen eine erste Längsbohrung (81) mit einem ersten Durchmesser eingebracht wird, die vor dem auszubildenden Spreizbereich (15) endet; daß dann eine zweite Längsbohrung (82) mit einem zylindrischen Abschnitt (11) mit reduziertem Durchmesser und mit im Spreizbereich (15) sich zum Ende (14) hin verjüngenden Abschnitt eingebracht wird; daß der Spreizbereich (15) mehrfach längsgeschlitzt wird, wodurch die aufspreizbaren Spreizsegmente (12) entstehen; daß die Spreizsegmente (12) mittels eines Dorns (16) oder dergleichen aufgeweitet werden, bis der sich verjüngende Abschnitt der Längsbohrung (82) in einen zylindrischen Verlauf übergeht, daß daraufhin in den im Durchmesser reduzierten Bereich (9) ein an das Gewinde (13) der Befestigungsschraube (2) angepaßtes Innengewinde (10) geschnitten wird; und daß dann die Segmente (12) wieder in ihre ursprüngliche Lage zusammengedrückt werden.
(Priorität: 13.01.89; P 39 00 828.2)

EP 0 377 820 A1

Fig. 1

Fig. 2

Fig. 3

Fig. 4

# Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.X6 5) |
|---|---|---|---|
| A | DE - A1 - 2 454 718 (ZIFFERER) <br> * Anspruch 1; Fig. 1; Seite 3, 2. Absatz * <br> -- | 1 | F 16 B 13/06 |
| A | DE - A - 3 237 059 (HILTI AG) <br> * Fig. 1,3; Seite 8, letzter Absatz * <br> -- | 1 | |
| A | DE - A1 - 3 535 618 (IMPEX-ESSEN) <br> * Fig. 1,3 * <br> -- | 1,6 | |
| A | CH - A - 586 356 (HUWYLER) <br> * Fig. 1,3 * <br> -- | 1,2 | |
| A | GB - A - 2 125 507 (AVDEL LIMITED) <br> * Zusammenfassung * <br> ----- | 1,5 | |

**RECHERCHIERTE SACHGEBIETE (Int. Cl.X6 5)**

F 16 B 13/00

Der vorliegende Recherchenbericht wurde für alle Patentansprüche erstellt.

| Recherchenort | Abschlußdatum der Recherche | Prüfer |
|---|---|---|
| WIEN | 22-01-1990 | RIEMANN |

## EINSCHLÄGIGE DOKUMENTE

EP 89122140.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.X 5 |
|---|---|---|---|
| A | DE - A1 - 2 454 718 (ZIFFERER) * Anspruch 1; Fig. 1; Seite 3, 2. Absatz * -- | 1 | F 16 B 13/06 |
| A | DE - A - 3 237 059 (HILTI AG) * Fig. 1,3; Seite 8, letzter Absatz * -- | 1 | |
| A | DE - A1 - 3 535 618 (IMPEX-ESSEN) * Fig. 1,3 * -- | 1,6 | |
| A | CH - A - 586 356 (HUWYLER) * Fig. 1,3 * -- | 1,2 | |
| A | GB - A - 2 125 507 (AVDEL LIMITED) * Zusammenfassung * ---- | 1,5 | |

**RECHERCHIERTE SACHGEBIETE (Int. Cl.X 5**

F 16 B 13/00

Der vorliegende Recherchenbericht wurde für alle Patentansprüche erstellt.

| Recherchenort | Abschlußdatum der Recherche | Prüfer |
|---|---|---|
| WIEN | 22-01-1990 | RIEMANN |